# EUROPEAN PATENT SPECIFICATION

(11) **EP 3 194 523 B1**
(45) Date of publication and mention of the grant of the patent: **29.04.2020**
(21) Application number: 15766363.4
(22) Date of filing: 09.09.2015
(51) Int. Cl.: C09K 8/66, C09K 8/80, C09K 8/84

(54) **LOW TEMPERATURE CURABLE PROPPANT**
BEI NIEDRIGER TEMPERATUR HÄRTBARES STÜTZMITTEL
AGENT DE SOUTÈNEMENT DURCISSABLE À BASSE TEMPÉRATURE

(30) Priority: 16.09.2014 US 201462050944 P
(43) Date of publication of application: 26.07.2017
(73) Proprietor: Durez Corporation, Novi, MI 48377 (US)
(72) Inventor: RAPPOLT, James J., Lockport, NY 14094 (US)
(74) Representative: dompatent von Kreisler Selting Werner - Partnerschaft von Patent- und Rechtsanwälten mbB
(86) International application number: PCT/US2015/049085
(87) International publication number: WO 2016/044016

(56) References cited:
- US-A- 4 336 842
- US-A1- 2005 173 116
- US-A1- 2010 065 271
- US-B1- 6 311 773

## Description

### Technical Field of the Invention

The invention relates to low temperature curable proppant particles, a method for using said particles and the use of these particles for preventing closure of fractures and keeping the hydrocarbon conductivity of packed spaces of the subterranean formation.

### Background of the Invention:

In the wellbore process of hydraulic fracturing, a water based solution is pumped under very high pressures into an oil or gas containing rock formation to create fractures. During the process, a proppant is then pumped into the well, usually as a water slurry, and often suspended in a gel-like polymer solution. The proppant particles, which are usually spherical particles of sand or ceramic, fill the voids in the fractures that are created, so that when the hydraulic pressure is released on the fracture, the cracks between the rock remain propped open. Thus, the proppant improves the rate of gas or oil production from the well.

Synthetic resins are often used to coat the proppant. Resin coated proppants can be precured or curable. With precured resin coated proppant, the primary function of the resin coating is to reinforce the proppant, reducing the tendency of the particles to crush under the pressure in the formation. Curable resin coatings are partially cured coatings which still have the ability to soften, flow, bond, and cure under the pressures and temperatures in the well. As curable proppant particles soften and flow a little under well temperature and pressure conditions, the particles fuse together and as they cure, they form a solid fused, porous mass. This fused porous mass prevents the backflow of sand and particulates from the fracture back up the wellbore, which is detrimental to the equipment and the integrity of the fracture. Standard curable resin coated proppant works well down to temperatures of about 89.2-93.3 °C (180-200 °F).

At lower temperatures, the partially cured resin does not exhibit sufficient bonding properties to form a fusible mass, thus, flowback of particulates can occur when pressure is released from the well.

"Activators" are materials that are sometimes used in conjunction with low temperature wells to enhance the bonding properties. Activators are liquids that are pumped into the well after the proppant has been placed and are typically solutions of solvents (such a methanol, ethanol, isopropanol plus some surfactants). The solvents are absorbed into the resin particles and create some tackiness of the resin surface that aids in bonding the particles. U. S. Patent 4,336,842 discloses the use of an activator comprising alcohol plus a nonionic surfactant in water. The downside of using an activator is that it creates an extra step in the fracturing process, it introduces the hazards of handling and pumping flammable materials. There is a need and desire in the market to eliminate these hazards and extra process steps at the well.

U. S. Patent Nos. 5,775,425, 5,787,986, 5,833,000, 5,839,510, 5,839,510, 6,047,772, and 6,209,643 all involve the use of a tackifying compound that is coated on at least a portion of the particles that are introduced into the formation to control flowback. The tackifier material causes the particles to stick together. The tackifying materials are generally polyamide type thermoplastic materials but can also be polyester, polycarbamates, polycarbonates, and natural resins, such as shellac. These tackifiers are added to the treatment fluid. U. S. Patent Nos. 5,839,510, 6,047,772, and 6,209,643 also involve the use of a synthetic resin in conjunction with the tackifier that is also added to the treatment fluid. The downside of this approach is that the materials have to be mixed at the well site.

U. S. Patent No. 7,032,667 also uses polyamides, polyesters, polycarbamates, polycarbonates and natural resins. In this case, the tackifier resins are coated on a resin coated proppant at the well site, rather than mixing into the fluid. But they are still coated at the well site. U. S. Patent No. 7,484,564 involves the use of a delayed tackifying composition. This composition utilizes a combination of a water soluble delayed acid-releasing activator and a tackifier composition that is activated by exposure to the acid releasing activator. This mixture can be coated onto proppant particles and activates in water.

U. S. Patent No. 7,490,667 discloses the use of a water soluble outer coating along with microparticulate reinforcing agents that are contained in the outer coating and/or are partially contained in the inner coating. The water soluble coating is designed to dissolve under well conditions, except at the contact points between the particles, where the water soluble polymer is less available for dissolving, and the microparticles remain in place, spacing the proppant particles. By this design, the pore spaces between the particles is increased, increasing conductivity.

U. S. Patent Nos. 7,595,280 and 8,584,754 disclose a delayed tackifier particulates coated with a tackifier that is associated with a surfactant, where the surfactant "turns off the tackiness of the tackifier temporarily. Upon washing, the surfactant is removed and the tackiness is turned on. This patent claims to alleviate equipment cleanup problems associated with tackified proppants that are pumped in a tacky state.

U. S. Patent No. 8,579,028 discloses a stable tackified particle, in which the particle is first coated with a tackifier, then contacted coated particles with a hydratable partitioning agent to form coated particles capable of being stored for a time period. The suitable tackifiers encompass a wide range of chemistries.

The coating of surfactants on a proppant alone is also known. Proppants are coated with surfactants to change the wettability of the proppant with regard to water or hydrocarbons. They are generally used at low levels (i.e., 0.005 to 0.1 % based on the proppant wt.), see for example copending U. S. Patent Application Publication No. US2015/0203744. However, surfactants are not used to improve the tackifying properties of curable proppant. US4336842 discloses a method of treating a subterranean formation, using particles coated with a thermosetting resin, which are cured in the presence of an agent which lowers the temperature at which the resin fuses. One agent is a surfactant with HLB in the range of 8-18, such as an ethoxylated secondary C11-C15 alcohol. The presence of the surfactant lowers the fusion temperature of the resin-coated particles. The experiments show that the compressive strength of cured resin-coated particle samples increases when the curing is carried out in the presence of surfactant. The surfactant forms part of an aqueous fluid containing the particles.

In view of the circumstances above, I have invented new proppant particles. The proppant particles of the invention do not require the addition of tackifiers or flammable activators at the well site. The proppants of the invention also exhibit excellent crush resistance.

### SUMMARY OF THE INVENTION:

The present invention and its preferred embodiments become apparent from the set of claims. Here, the
surfactant type-material interacts with the resin coating and enhances the natural tackiness of the resin of the coated particle under aqueous conditions and pressure, thereby reducing or eliminating the need for adding an "activator" at the well site for lower temperature wells. Curable resins such as phenolics or epoxies have a certain amount of natural tackiness. As the molecular weight of these polymers increases, (as in partial curing of the polymer), the tackiness of the polymer decreases. It has been found that higher levels of surfactants than what is used to improve the wetting properties of a proppant can greatly enhance the natural tackiness of the partially cured resin when the coating is wetted with water, yet the coated proppant particle is dry and free flowing at room temperature when not wetted. While not being limited by theory, it is felt that the hydrophobic end of the surfactant has somewhat of a solvating effect on the resin coating, whereby it aids in softening the surface of the particle slightly, while the hydrophilic portion provides some surface lubricity which helps keep the treated particulates from sticking together. It is here noted that the surfactant at the specific concentration defined in this application does not make the proppant particles wet.

### BRIEF DESCRIPTION OF THE DRAWINGS

Embodiments in accordance with the present invention are described below with reference to the following accompanying figures and/or images. Where drawings are provided, it will be drawings which are simplified portions of various embodiments of this invention and are provided for illustrative purposes only.
FIG. 1 depicts a partial cross-sectional view showing an embodiment of coated particles according to the present invention.
FIG. 2 is a conceptual view for explaining a method for recovering hydrocarbon from a subterranean formation.

### DETAILED DESCRIPTION:

The examples of the particles (core particles) for the invention can include basically any coatable particles that are useful for proppants or gravel packs, including, but not limited to sand, ceramic, glass spheres, ground walnut shells, coconut shells, cherry pit pieces, composite particles, organic polymer particles, and the like.

The resins of the invention n are phenolic resins.

Pressure sensitive adhesives are sometimes not suitable in the present invention. The examples of the pressure sensitive adhesives, that are not suitable, can include acrylic acid polymers; acrylic acid ester polymers; acrylic acid derivative polymers; acrylic acid homopolymers; acrylic acid ester homopolymers (such as poly(methyl acrylate), poly (butyl acrylate), and poly(2-ethylhexyl acrylate)); acrylic acid ester co-polymers; methacrylic acid derivative polymers; methacrylic acid homopolymers; methacrylic acid ester homopolymers (such as poly(methyl methacrylate), poly(butyl methacrylate), and poly(2-ethylhexyl methacrylate)); acrylamidomethyl-propane sulfonate polymers; acrylamido-methyl-propane sulfonate derivative polymers; acrylamido-methyl-propane sulfonate co-polymers; and acrylic acid/acrylamido-methyl-propane sulfonate co-polymers.

The phenolic resin can be a novolac or a resole, or combinations thereof.

The phenolic resin can be prepared from the reaction of formaldehyde with a phenol. The phenol can be pure phenol, or a substituted phenol such as bisphenol A, cresols, xylenols, cresylic acid blends, butylphenol, amylphenol octylphenol, nonylphenol, dodecylphenol, cardol, cardonol, cashew nutshell liquid, resorcinol, or any combinations thereof.

The phenolic novolac or resoles can be modified. Desirable modifications include toughening agents which decrease the dust formation such as polyvinyl acetal resins such as polyvinylbutyral or polyvinylformal as disclosed in U. S. Patent No. 4,732,920. A wide range of tougheners can also be used incorporated into the resin including thermoplastic elastomers as described in U. S. Patent Nos. 7,270,879, and 7,759,435.

The examples of the additives used in the invention are as follows. There are several classes of additives that are useful in the coating. The additives can be incorporated into the resins or added separately during the coating process. To improve bonding between the resin and the substrate, reactive silane coupling agents can be used. Such coupling agents include amino functional silanes, or epoxy functional silanes. Typical examples of each type are gamma aminopropyltriethoxysilane and 3-glycidoxypropyltrimethoxysilane. Lubricants can be added to help the resin coated particles break up. Examples of such lubricants can be silicone oil, paraffin wax, ethylenebisstearamide wax, Chembetaine, and the like. The coating can also incorporate the use of a variety of organic or inorganic fibers or organic or inorganic fillers to reinforce the resin.

The examples of the surfactants can include cationic surfactants, anionic surfactants and non-ionic surfactants can be used. In some embodiments of this invention, non-ionic surfactants are used. Examples of suitable nonionic surfactants include polyglycol ethers of phenols such as phenol, nonylphenol, styrenated phenols, and the like. The term "polyglycols" can be polyethylene glycols (PEGs), polypropylene glycols (PPGs), and random or block copolymers of PEGs and PPGs. Commercial examples can be the Dow Triton "X" series of surfactants, and the Tergitol "NP" Series, and the like. Other suitable surfactants also include polyglycol ethers of linear and branched primary and secondary alcohols from C6 - C22. The Dow EcosurfEH series of surfactants fits this category as does Dow Tergitol 15S series, and the Tergitol TMN series of surfactants. Other examples can include but not limited to PEGs of oleyl alcohol, steryl alcohol or glycerol, to name a few.

Polyglycol fatty acids esters can also be used. Examples from this class can be ethylhexanoic acid polyglycol esters, stearic acid esters, oleic acid esters, castor oil ester, tall oil fatty acid ester, and the like. Pure PEG, PPG, polymers and PEG/PPG copolymers are also suitable for use.

In another aspect of this invention the proppants may also contain an outer, second type of surfactant that is added to aid in the wettability of the finished proppant as is commonly used in the industry. Any of the surfactants which would bring about such an effect without compromising the wet unconfined compressive strength of the proppants of this invention can be used to improve water wettability of the proppant.

In one embodiment of the present invention (e.g., a typical curable phenolic resin coated proppant), the proppant particles are heated to a temperature in the range of 140-230 °C. Then, in a mixer, a resin (e.g., novolac resin) is added to the heated proppant particles (e.g., sand). Typically 0.1-5 parts of resin is added to 100 parts of sand based on the sand weight. The resin is mixed for sufficient time to allow the resin to melt, flow, and wet out the surface of the proppant particles. After sufficient time has been allowed for the resin to coat the proppant particles, a curative is added. The curative, usually hexaminetetraamine, or "hexa" is added as a 10% - 40% solution in water at a temperature in the range of 145-190 °C. The exact temperature is dependent upon the reactivity of the resin, the desired degree of cure, and the hexa content used. The amount of hexa added can vary from about 2 parts to about 20 parts by weight of solid hexa to 100 parts of resin based on the resin wt (e.g., phenolic novolac wt). In some embodiments, it can be from 4 parts to 10 parts hexa per 100 parts of resin. The exact amount chosen is dependent on the desired properties of the curable proppant. After the hexa solution is added, the coated proppant becomes heavy in the mixer and then breaks up into discrete coated proppant particles.

The curative (e.g., hexa) reacts with the resin and initiates the curing reaction, thereby causing partially curing the resin. Here, the molecular weight grows significantly which causes the resin coated sand to "breakup" into discrete particles. At this stage, the coated sand can be cooled to stop the reaction, forming what's called a "curable "proppant. It still has an ability to melt, flow, and bond under conditions of heat and pressure. In order to maintain a state of "curable," it is preferable that the circumstances should be appropriate. If the temperature is left high for a long period of time, the proppant will become fully cured.

The coating process can involve a single coating of resin/curative or multiple coatings. In the case of multiple coatings, the innermost coating can be precured or curable. After the particles break up, the coated proppant is cooled and discharged from the mixer.

In some embodiments, the coating of resin and curative is carried out at least for two times causing two coats of the resin which is partially cured with a curative as described hereinabove. The amount of resin used in each of these coating steps can be 0.1-5 parts of resin per 100 parts of sand based on the weight. Typically, the sand is first coated with the resin and then curative, and allowed to cure for sufficient amount of time. Then, the second coat of resin and the curative is carried out sequentially on the first coat.

Advantageously, it has also been found that multiple coatings of resin/curative afford beneficial effect to the resulting proppant. Accordingly, in some embodiments more than one coat of resin/curative on the proppants (e.g., sand particles) are carried out. In some other embodiments more than two coat of resin/curative on the proppants (e.g., sand particles) are carried out. Further, in some embodiments more than three coat of resin/curative on the proppants (e.g., sand particles) are carried out. In each of these cases, the proppant particles, such as sand is sequentially coated with resin and then with the curative, and the process is repeated as desired to obtain multiple coats of the resin and the curative.

In some embodiments, after coating with the first layer of resin/curative, the proppant particles were subjected to a suitable first temperature (hereafter referred to as starting temperature) for sufficient length of time at which time the resin is partially cured (referred herein as curable). Then the proppants were coated with a second layer of resin/curative and then subjected to a second temperature which is generally lower than the first temperature and sufficient time is allowed for the resin to partially cure (referred to herein as partially cured). It has generally been observed that the outer resin coating should be maintained partially cured to obtain the maximum beneficial effect from the proppants of this invention. Again, as described herein the surfactant is added either after the first resin coat or after the second resin coat. In some other embodiments the proppants are coated in a similar fashion with more than two coats of resin/curative.

In the invention, after the coated proppant starts to break up into discrete coated proppant particles, in the range of e.g., 100-150 °C, a surfactant is added. This surfactant is generally more hydrophobic and added at a higher concentration than surfactants conventionally used to improve water wettability of the proppant as described in some of the prior art references mentioned hereinabove. Addition of the surfactant after the breakup appears to concentrate the surfactant on the surface of the particles more. Addition of the surfactant at the onset of the breakup tends to retard the breakup process and tends to incorporate more of the surfactant into the resin layer and reduce tackiness of the finished product. Addition of the surfactant before the breakup appears to incorporate a significant amount of the surfactant into the resin phase. All three approaches can be useful in the improvement of low temperature bonding. In one embodiment, 0.1-2.0 parts of surfactant can be added per 100 parts of proppant particles. In another embodiment, more than 0.1 parts of surfactant can be added per 100 parts of proppant particles. In another embodiment, more than 0.1 parts and 2.0 or less parts of surfactant can be added per 100 parts of proppant particles. In another embodiment, 0.15-2.0 parts of surfactant can be added per 100 parts of proppant particles. In yet another embodiment, 0.2-2.0 parts of surfactant can be added per 100 parts of proppant particles. In yet another embodiment, 0.30-2.0 parts of surfactant can be added per 100 parts of proppant particles. In yet another embodiment, 0.45-2.0 parts of surfactant can be added per 100 parts of proppant particles. In yet another embodiment, 0.2-1.0 parts of surfactant can be added per 100 parts of proppant particles. In another embodiment, 0.15-1.0 parts of surfactant can be added per 100 parts of proppant particles. In yet another embodiment, 0.2-1.0 parts of surfactant can be added per 100 parts of proppant particles. In yet another embodiment, 0.30-1.0 parts of surfactant can be added per 100 parts of proppant particles. In yet another embodiment, 0.45-1.0 parts of surfactant can be added per 100 parts of proppant particles. In yet another embodiment, 0.1-0.6 parts of surfactant can be added per 100 parts of proppant particles. In another embodiment, 0.15-0.6 parts of surfactant can be added per 100 parts of proppant particles. In yet another embodiment, 0.2-0.6 parts of surfactant can be added per 100 parts of proppant particles. In yet another embodiment, 0.30-0.6 parts of surfactant can be added per 100 parts of proppant particles. In yet another embodiment, 0.45-0.6 parts of surfactant can be added per 100 parts of proppant particles. The addition of the surfactant makes the mixture wet in appearance. As the mixture cools, the coated proppant appears to "dry out" and become a dry free flowing proppant while cooling to room temperature.

Furthermore, it has also been found that in a multiple resin coating process, the surfactant can be added at several different points in the process to achieve satisfactory results. For example, the surfactant can be added after the first resin addition, after the first hexa addition, after the second resin addition, after the second hexa addition and still make a satisfactory product. It has also been found that all of the surfactant can be added to the phenolic resin before the coating process. This could occur in the resin reactor or in a molten state or the resin could be added to the coating process with the surfactant simultaneously. Accordingly, all such possible combinations of additions are within the scope of this invention and as further exemplified in the specific examples that follow.

It has now been found that a wide variety of surfactants can be employed to coat the proppants of this invention. Any of the surfactant as described herein and known in the art which will bring about the desirable effects can be employed herein. Exemplary surfactants that are useful in this invention include the following without any limitation:
Echem EE374: polyethylene glycol (PEG) oleate
Hallstar 4400: polyethylene glycol (PEG) monostearate
Ecosurf EH-14: 2-ethylhexanol ethylene oxide/propylene oxide (EO-PO) copolymer
Pluronic L-64: ethylene oxide/propylene oxide (EO-PO) block copolymer
Emulsogen PF 20-S: ammonium EO-PO polymer (ionic surfactant)
Carbowax 4000: PEG (polyethylene glycol)
Ecosurf SA-15: C6-C16 alcoholate EO-PO polymer
Echem EE400: PEG monostearate
Sapogenat T060: PEG tributyl phenol ether
Sapogenat T110: PEG tributyl phenol ether
Sapogenat T300: PEG tributyl phenol ether
Sapogenat T500: PEG tributyl phenol ether
TMN-10: PEG trimethylnonylether

In addition, it has been further found that surfactants with certain hydrophilic hydrophobic balance (HLB) provides advantageously beneficial effects to the proppants of this invention. As used herein, "hydrophilic hydrophobic balance (HLB)" shall have the generally accepted meaning in the art. That is, HLB is a measure of the degree to which it is hydrophilic (i.e., having affinity towards water) or lipophilic (i.e., having affinity towards lipids or hydrophobic), determined by calculating values for the different regions of the molecule. Generally, a surfactant with a HLB value of less than ten is lipid soluble, and a surfactant with a HLB value of greater than ten is water soluble. Accordingly, in some embodiments, the surfactants with an HLB value of at least 10 are employed. In some other embodiments surfactants having an HLB value in the range of 10 to 20 are employed to form the proppants of this invention.

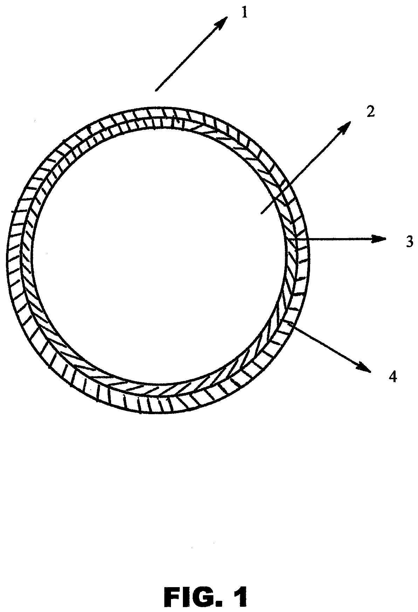

Now turning to FIG. 1, which shows a partial cross-sectional view showing an embodiment of the coated particles according to the present invention. Specifically, FIG. 1 shows an embodiment, featuring a cross-sectional pictorial view of particle 1 of this invention in which the particles are coated with two coats of resin/curative. The core of the particle 2 can be any of the particles as described herein, such as for example sand or ceramic particle. The inner layer 3 is the first coating of the resin/curative, and outer layer 4 is the second coat of the resin/curative. As described herein the particles can first be heated to a temperature in the range of 140 to 230 °C and then mixed with a first portion of resin and the curative. Then the second portion of the resin and the curative can be added either at the same temperature or at second temperature which can be same as the first temperature and sufficient time is allowed during each of these coating cycles for the resin to melt and coat the particles as described hereinabove. In some embodiments the second coating of the resin can be carried out at a lower temperature than the first coating of the particles. In some other embodiments the second coating of the resin can be carried out at a higher temperature than the first coating of the particles. The surfactant can be added at the end of the second coat or after the first coat. Accordingly, in some embodiments the surfactant is added immediately after the first coat of the resin. In some other embodiments the surfactant is added immediately after the second coat of the resin. In some other embodiments the surfactant is added simultaneously with the first coat of the resin or with the second coat of the resin. In some other embodiments more than one surfactant is employed.

More specifically, it has also been found that in a multiple resin coating process, the surfactant can be added at several different points in the process to achieve satisfactory results. For example, the surfactant can be added after the first resin addition, after the first hexa addition, after the second resin addition, after the second hexa addition and still make a satisfactory product. It has also been found that all of the surfactant can be added to the phenolic resin before the coating process. This could occur in the resin reactor or in a molten state or the resin could be added to the coating process with the surfactant simultaneously. Again, all such combinations of addition of one or more surfactants at different process steps in making the proppants are within the scope of this invention.

Furthermore, as noted above any of the known surfactants, including cationic, anionic or non-ionic surfactants can be employed in any combination thereof. An example of ionic surfactant include anionic surfactant, such as, polyalkylene glycol ether sulfate, generally available as an ammonium salt. For instance, ammonium salt of ethylene oxide/propylene oxide (EO-PO) polymer sulfate is commercially available as Emulsogen PF 20 S® from Clariant Corporation.

The proppant particles thus prepared are not required to add solvents serving as an activator. Unlike U. S. Patent No. 4,336,842, the inventive proppant particles when used are not associated with flammable organic solvents such as alcohols (e.g., methanol, ethanol, isopropanol etc.) and acetone, and methyl ethyl ketone, thereby reducing the hazard. For example, flammable solvents are not required to be added at a concentration of more than 3 vol%, or 5 vol%, unlike U. S. Patent No. 4,336,842.

Until the proppant particles are actually used in the wellbore process, the proppant particles can be kept in the dry condition.

In use at the well site, the proppant particles are usually contacted with water while creating a water based proppant slurry and pumping the proppant particles into a wellbore. At this time, the contact with water can enhance the tackiness.

In the present invention, the proppant particles in a dry condition have a first tackiness, and the proppant particles in a wet condition have a second tackiness.

The tackiness of the present invention can be measured by the Unconfined Compressive Strength (UCS) Test described below.

In the absence of water, the proppant particles in a dry condition show a negligible amount of bonding (i.e., negligible UCS). As the first tackiness, the proppant particles in a dry condition or in the absence of water have an UCS of 0.03 MPa (5 psi) or less, or less than 0.014 MPa (2 psi), in particular, 0-0.14 MPa (0-2 psi). The UCS is measured in accordance with the procedures as described hereinbelow.

In a wet condition, the proppant particles have an UCS of 0.14 - 0.97 MPa (20-140 psi), in particular, 0.21 - 0.55 MPa (30-80 psi). In one embodiment, depending on the application, the UCS in a wet condition can be adjusted or designed into 0.14-0.28 MPa (20-40 psi), 0.21 - 0.41 MPa (30-60 psi), 0.28 - 0.55 MPa (48-80 psi), 0.34-0.69 MPa (50-100 psi), 0.41 - 0.83 MPa (60-120 psi), 0.48 - 0.97 MPa (70 - 140 psi) or higher.

In addition, the proppant particles of the present invention are excellent in their crush resistance feature. This feature can be assessed by the crush resistance test shown in the Examples below. In the crush resistance test, the proppant particles of the present invention have a crush resistance rate of 10 % or less at 68.95 MPa (10,000 psi) closure stress, in particular 0-7%, or more in particular 0.1-5%. In the present invention, it is believed that the resin coating can contribute to exhibiting the tackiness and reinforcing the core particles.

In another aspect of this invention the coated particles of this invention are packed into fractures formed in a subterranean formation. The coated particles are used for preventing closure of the fractures and keeping conductivity of packed spaces of the subterranean formation (that is, the fractures of the subterranean formation) in which the coated particles are packed. This makes it possible to improve a flowing rate of hydrocarbon contained in the subterranean formation through a wellbore formed so as to penetrate the subterranean formation. As shown in FIG. 1, each coated particle 1 includes a core particle 2 and two resin coated surface layers 3 and 4 as described above, if two coat particles are employed in the tracking operation.

The core particles 2 serve as a propping agent in the fractures when the coated particles 1 are packed into the fractures. As the core particles 2, various kinds of particles having relatively high mechanical strength can be used. The core particles 2 are not limited to a specific kind. Non-limiting examples of the core particles 2 include ceramics particles, silica particles, metal particles, organic particles, or any of the other particles as described hereinabove or one known to one of skilled in the art.

In some embodiments, among the above particles, core particles 2 include at least one of a sand type particle and a ceramic type particle. Both of the sand type particle and the ceramic type particle have high mechanical strength and can be easily obtained at relatively low cost.

In FIG. 1, a cross-sectional shape of the coated particle **1** is depicted as a substantially circular shape, but may be an ellipsoidal shape, a polygonal shape, an irregular shape or the like. In this case, a particle size of the core particle **1** is defined as maximum length in a cross-sectional shape thereof. It should further be noted that at least part of the outer surface of each core particle **1** is coated with resin/curative layers **3** and **4.** By having these outer resin layers **3** and **4,** the proppant particles of this invention do not crush and collapse into pieces due to the earth stress when packed in a fracture of the subterranean formation,

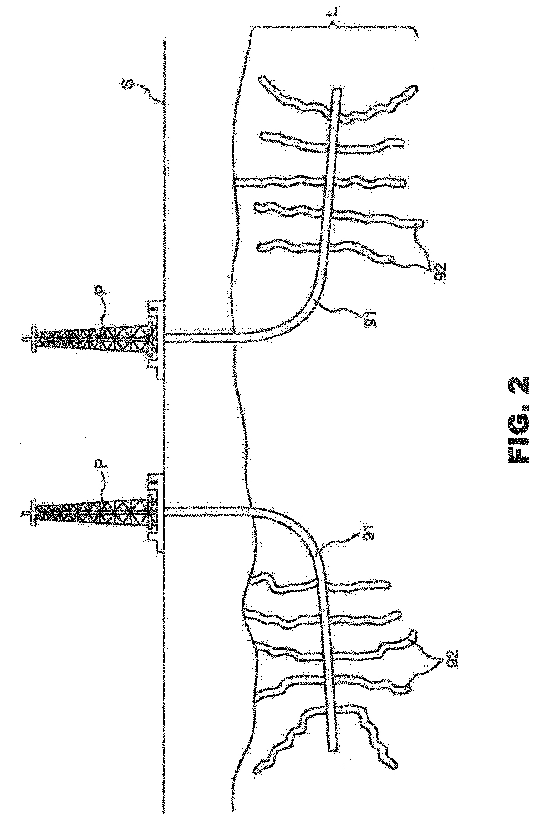

Turning now to FIG. 2 which shows a conceptual method for recovering the hydrocarbon (shale gas and/or shale oil) from the subterranean formation. First, as shown in FIG. 2, a wellbore **91** is dug from a land surface **S** to a desirable subterranean formation **L** containing the hydrocarbon in a vertical direction. After the wellbore **91** reaches the subterranean formation **L,** the digging direction thereof can be changed to other direction, such as for example a horizontal or a slanted direction, and then the wellbore **91** is dug in the subterranean formation **L** until the wellbore **91** forwards a predetermined distance in the desirable direction, for example, horizontal direction. Then a fluid, which is commonly used for such purpose, such as for example, a two percent potassium chloride solution is injected into the subterranean formation **L** through the wellbore **91** at a predetermined rate and pressure. At this time, the fluid gradually breaks down soft parts of the subterranean formation **L.** In this way, a plurality of fractures **92** are formed in the subterranean formation **L** so as to be communicated with the wellbore **91** and radially positioned around an axis thereof.

Next, an injection material is injected into the subterranean formation **L** through the wellbore **91** at a predetermined rate and pressure instead of the fluid. At this time, the injection material is injected into each fracture **92** together with the coated particles **1.** The injection material generally contains the aforementioned fluid and the coated particles 1 of this invention. The injection material may also contain other particles known in the art which would work synergistically with the coated particles **1,** i.e., proppants of this invention. Generally, it has now been observed that proppants of this invention improves the low temperature bonding between proppant particles thereby reducing the sand produced when the well is backflowed, and avoids the use of any activators as used by the prior art and as discussed hereinabove. Thus, proppants of this invention not only offers significant operational advantages over the prior art, particularly lowering the cost of operation, but also provides significant environmental advantages by lowering and/or eliminating any undesirable pollutants such as volatile organics used by the prior art methods, which needs to be disposed as a waste, thus causing undesirable environmental issues. Furthermore, the amount of proppants of this invention (i.e., coated particles **1**) in the injection material is gradually increased while packing the fractures **92** so as to obtain high density packing of the fractures in order to exploit maximum advantage from the coated particles 1 of this invention.

In addition, by packing the proppants of this invention (i.e., coated particles **1**) into each fracture **92** in such a way, it is possible to prevent each fracture **92** from being closed due to the earth stress. According to the present invention, in particular, since the surface layers 3 and **4** of the coated particles **1** contain the resin/curative with a surfactant, it is possible to keep conductivity of each fracture **92** in which the coated particles **1** are packed as mentioned above. Therefore, a flowing rate of the hydrocarbon from the subterranean formation **L** through the wellbore **91** can remarkably be increased. Finally, the hydrocarbon is recovered through each fracture **92** and the wellbore **91** from the subterranean formation **L** using a pump **P** provided on the land surface **S.**

### Examples

The following examples are detailed descriptions of methods of preparation and use of proppants as described herein. The detailed preparations serve to exemplify, the more generally described methods of preparation set forth above. The examples are presented for illustrative purposes only. As used in the examples and throughout the specification the parts of particles and other materials are on weight basis unless otherwise specified.

### EXAMPLE 1

A curable proppant was prepared by coating 40 g of Durez 34363, a commercially available phenolic novolac resin, and hexa on 1000 g of 20/40 Northern White sand in a Hobart Model N50 mixer. After the coating process was complete, the coated sand broke up. At which time, 5 g of Tergitol TMN -10 surfactant was added to the coated sand while cooling. At about 104 °C, the coated sand, which looked wet in consistency, began to dry out and broke up again. At 78 °C the free flowing proppant was dumped into a cooling pan to finish cooling to room temperature. A sample of the coated sand was placed in a 60 °C (140 °F) oven for 24 hrs and was free flowing. This sintering test demonstrates that the proppants of this invention are free flowing and do not agglomerate under these conditions, and therefore, can be transported readily.

The Comparative Example 1 is provided below to show the benefits obtained by the instant invention can't be obtained by the proppants made without the surfactant used in Example 1, and as further summarized in Table 1 above. Comparative Example 2 is provided to show that the use of surfactant alone to treat the sand will not provide the same benefits as provided by the instant invention and further summarized in Table 1 above.

### COMPARATIVE EXAMPLE 1

A curable proppant was prepared substantially in the same manner as in Example 1 except that no surfactant was added to the curable proppant containing the sand and novolac resin. At 115 °C, the proppant was dry and free flowing. At 110 °C, the curable proppant was dumped into a cooling pan to finish cooling. A sample of the coated sand was placed in a 60 °C (140 °F) oven for 24 hrs and was found to be free flowing.

### COMPARATIVE EXAMPLE 2

1000 g of 20/40 Northern White sand was preheated in an oven. The sand was added to a Hobart N50 mixer and cooled to 140 °C. At 140 °C, 5 g of Tergitol TMN-10 surfactant was added and the mixture was cooled to 60 °C and discharged. The mixture was still "wet" when discharged. No resin was used in this Comparative Example 2.
Testing of the coated proppant:
Crush Resistance Test: The crush test determines the resistance of a proppant pack to crushing under compressive forces. The procedure used is similar to the American Petroleum Industry Publication "Recommended Practices for Testing High-Strength Proppants Used in Hydraulic Fracturing Operations", ("API Recommended Practice 60"). Samples of 20/40 proppant were screened 417 µm (40 mesh) screen using a Rotap sieve shaker to remove any fines. Then a 40 g sample was placed in a 5.08 cm (2") diameter test cell and the closure stress was ramped to 68.95 MPa (10,000 psi)
over 2 minutes in a hydraulic press and maintained for 2 minutes at the set pressure. When the pressure is released, the sample is removed from the test cell and screened on a 417 µm (40 mesh) screen using a Rotap sieve shaker. The fines (crushed proppant) in the bottom pan are weighed and expressed as a percentage of the starting weight.

Unconfined Compressive Strength Test ("UCS Test"): Unconfined compressive strength is a test designed to show the bondability of coated proppant under specific temperature and pressure conditions. In this test, 278 g of 2% KCl is weighed into a 600 ml beaker. Two drops of dishwashing detergent are added. Then 400 g of coated proppant is added to the solution and the slurry is stirred until the proppant is well wetted out. The slurry is then loaded into a UCS test cell. The test cell is cylindrical in shape and has a removable bottom and top. The bottom of the cell has a screen and a drain valve. The top has a gas inlet to pressurize the cell. Sufficient slurry is loaded into the cell to produce a 15.24 cm (6") long slug of proppant and the balance is filled with the liquid. The bottom valve is kept closed while filling. When full, a floating piston is added over the top of the liquid which forms a tight seal in the top of the cell. After placing the piston, the bottom valve is opened to allow liquid to be forced out. The cell is then pressurized to 6.89 MPa (1000 psi) with nitrogen pressure applied above the piston. The bottom valve is left open. The loaded, pressurized cells are placed in an oven at 51.7 °C (125 °F)
for 4 hours. Afterwards, the cells are removed from the oven and the slugs are extracted from the cells. The test slugs are allowed to dry for 24 hrs at room temperature. After drying, the slugs are cut in half to approximately 7.62 cm (3") with a hack saw and the ends are filed smooth and flat. The 7,62 cm (3") test slugs are placed in a Carver model #3912 press and the force required to break
the slug is recorded. Two UCS slugs (four test samples) are prepared and averaged.

Dry Unconfined Compressive Strength Test ("Dry UCS Test"): The same test as the Wet UCS Test was performed without adding 278 g of 2% KCl in the Wet UCS Test.

The results are shown in Table 1 below.

**Table 1**

| Test | Comparative Example 1 | Comparative Example 2 | Example 1 |
|---|---|---|---|
| Crush Resistant Test (% Crushed @ 10 K psi*) | 4.1% | 29.4% | 4.4% |
| UCS Test (UCS @ 125 °F**, psi) | No bonding | No bonding | 0.42 MPa (61 psi) |
| Dry UCS Test (UCS @ 125 °F, psi) | Not measured | Not measured | 0-0.014 MPa (0-2 psi) |

| | | | |
|---|---|---|---|
| *68.95 MPa; **51.7 °C Comparative Example 1, a normal, standard curable resin coated proppant showed no tendency to bond at the low temperature of the test conditions. No bonding means that the samples were pressed out of the cells as a wet pile of unbonded sand. Comparative Example 2 demonstrates that the surfactant by itself does not impart tackiness properties upon the sand. | | | |

In Example 1 of the invention, the samples were removed as whole slugs which exhibited a reasonably good compressive strength and had a similar crush strength to a normal curable proppant.

### Examples 2 - 8

Examples 2 to 8 illustrate the two coat process for coating the proppant. These examples also demonstrate the ability to add the surfactant at different points in the process to obtain proppants having remarkably improved properties as summarized in Table 2.

The procedures of Example 1 were substantially repeated by employing 1000 g of 20/40 Northern White sand, 40 g of Durez 34363 resin (4 % by weight), 1.8 g of hexa (4.5 % by weight of the resin employed) and 4 g of TMN-10 (0.4 parts per 100 parts of sand by weight). In each of these Examples 2 to 8, the sand was coated with resin in two coats, curing in two stages with hexa after each resin coat, and the surfactant was added at different time periods so as to coat the proppants with surfactants at different steps of the addition of the resin and the coating operation as summarized in Table 2.

In Example 2, the surfactant was added on the outside of the particle after having it coated first and second with resin and hexa additions. In this Example 2, the coating process was begun (the first resin addition) at a sand temperature of 155 °C. In Examples 3-6, the surfactant was added either after the first resin addition or first hexa addition at a starting sand temperature of 160 °C or 162 °C. In Examples 7-8, all of the surfactant was incorporated into the phenolic resin. This was accomplished by melting the resin on a hot plate and blending in the surfactant.

Each of the samples thus obtained in Examples 2 to 8 was evaluated by the crush resistance test and compressive strength test as described above. The starting temperature to coat the sand, the results of crush resistance test (shown as Crush, percentage), and the 51.7 °C (125 °F)
UCS test results are summarized in Table 2. It is clear from these results that the proppants of this invention generally exhibit excellent crush resistant properties as well as excellent compressive strength test.

**Table 2**

| Example No. | Addition Location of Surfactant | Temp (°C) | 68.95 MPa (10K psi) Crush % | 51.7 °C (125 °F) UCS kPa(psi) |
|---|---|---|---|---|
| 2 | On the outside | 155 | 5.9 | 627.42 (91) |
| 3 | After 1^{st} resin | 160 | 7.2 | 186.16 (27) |
| 4 | After 1^{st} hexa | 160 | 7.1 | 399.9 (58) |
| 5 | After 1^{st} resin | 162 | 5.7 | 158.58 (23) |
| 6 | After 1^{st} hexa | 162 | 5.9 | 441.26 (64) |
| 7 | All in resin | 155 | 6.0 | 289.58 (42) |
| 8 | All in resin | 155 | 4.5 | 468.84 (68) |

### Examples 9 - 16

These Examples 9 to 16 illustrate that a very wide range of surfactants can be employed to make the proppants of this invention. In each of these Examples 9 -16 the coating of the sand was carried out with two coats of the resin.

The procedures of Example 1 were substantially repeated by employing 1000 g of 20/40 Northern White sand, 40 g of Durez 34363 resin (4 % by weight), 1.8 g of hexa (4.5 % by weight of the resin) and 4 g of the surfactant (0.4 parts per 100 parts of sand by weight). In each of these Examples 9 to 16, the sand was coated with resin in two coats, curing in two stages with hexa after each resin coat, and the surfactant was added at the end of curing the second coat of resin, i.e., surfactant was coated on the outside of the resin layer. The starting temperature for the coating process was at 155 °C in each of these Examples 9 to 16.

Each of the samples thus obtained was evaluated by the crush resistance test and compressive strength test as described above. Various surfactants that were employed in each of these Examples 9 to 16, the results of crush resistance test (shown as Crush, percentage), and the 51.7 °C (125 °F) UCS test results are summarized in Table 3. It is clear from these results that
the proppants of this invention generally exhibit excellent crush resistance properties as well as excellent unconfined compressive strength test with any of the surfactants employed.

**Table 3**

| Example No. | Surfactant | 68.95 MPa (10K psi) Crush % | 51.7 °C (125 °F) UCS kPa (psi) |
|---|---|---|---|
| 9 | Echem EE374 | 4.4 | 854.95 (124) |
| 10 | Hallstar 4400 | 6.1 | 434.37 (63) |
| 11 | Ecosurf EH-14 | 5.6 | 620.53 (90) |
| 12 | Pluronic L-64 | 4.7 | 441.26 (64) |
| 13 | Emulsogen PF 20-S* | 5.4 | 799.79 (116) |
| 14 | Carbowax 4000 | 6.0 | 427.48 (62) |
| 15 | Ecosurf SA-15 | 6.8 | 723.95 (105) |
| 16 | Echem EE400 | 6.5 | 1296.21 (188) |

| | | | |
|---|---|---|---|
| * ionic surfactant | | | |

### Examples 17 - 20

These Examples 17 to 20 illustrate the effect of HLB of a surfactant on the properties of the proppants of this invention. In each of these Examples 17 - 20 the coating of the sand was carried out with two coats of the resin.

The procedures of Example 1 were substantially repeated by employing 1000 g of 20/40 Northern White sand, 40 g of Durez 34363 resin (4 % by weight), 1.8 g of hexa (4.5 % by weight of the resin) and 4 g of the surfactant (0.4 parts per 100 parts of sand by weight). In each of these Examples 17 to 20, the sand was coated with resin in two coats, curing in two stages with hexa after each resin coat, and the surfactant was added at the end of curing of the second coat of resin, i.e., surfactant was coated on the outside of the resin layer. The starting temperature for the coating process was at 155 °C in each of these Examples 17 to 20.

Each of the samples thus obtained was evaluated by crush resistance test and compressive strength test as described above. In each of Examples 17 to 20 the surfactant utilized contained the same basic hydrophobe, i.e., the lipophilic moiety. In this series, the ethylene oxide (EO) chain length and resultant HLB of the surfactant varied to provide different HLB values. The results of crush resistance test (shown as Crush, percentage), and the 51.7 °C (125 °F) UCS test results are summarized in Table 4. It is clear from these results that the HLB of a surfactant does have an effect on the UCS of the proppants of this invention as summarized in Table 4. In general, the surfactant with an HLB of 12 to 18 seem to afford proppants exhibiting excellent crush resistant properties as well as excellent low temperature unconfined compressive strength.

**Table 4**

| Example No. | Surfactant | HLB | 68.95 MPa (10K psi) Crush % | 51.7 °C (125 °F) UCS kPa (psi) |
|---|---|---|---|---|
| 17 | Sapogenat T060 | 10 | 5.1 | 193.05 (28) |
| 18 | Sapogenat T110 | 13 | 6.6 | 551.58 (80) |
| 19 | Sapogenat T300 | 17 | 5.5 | 592.95 (86) |
| 20 | Sapogenat T500 | 18 | 5.3 | 324.05 (47) |

### Examples 21-23

These Examples 21 to 23 illustrate the effect of different levels of surfactant on the properties of the proppants of this invention. In each of these Examples 21 - 23 the coating of the sand was carried out with two coats of the resin.

The procedures of Example 1 were substantially repeated by employing 1000 g of 20/40 Northern White sand, 40 g of Durez 34363 resin (4 % by weight), 1.8 g of hexa (4.5 % by weight of the resin) and different amounts of TMN-10 (expressed as X parts per 100 parts of sand by weight, as summarized in Table 5). In each of these Examples 21 to 23, the sand was coated with resin in two coats, curing in two stages with hexa after each resin coat, and the surfactant was added at the end of curing of the second coat of resin, i.e., surfactant was coated on the outside of the resin layer. The starting temperature for the coating process was at 162 °C in each of these Examples 21 to 23.

Each of the samples thus obtained was evaluated by the crush resistance test and compressive strength test as described above. Various levels of TMN-10 employed in each of these Examples 21 to 23, the results of crush resistance test (shown as Crush, percentage), and the 51,7 °C (125 °F) UCS test results are summarized in Table 5. It is clear from these results that even at moderately low levels of TMN-10, proppants having excellent UCS can be obtained by practice of this invention. However, it should be further noted that there may be an optimum surfactant content for any formulation. Beyond the optimum surfactant content, other properties such as crush resistance or free -flowing characteristics may change in a negative way.

**Table 5**

| Example No. | Level of Surfactant | 68.95 MPa (10 K psi Crush %) | 517 °C (125 °F) UCS kPa (psi) |
|---|---|---|---|
| 21 | 0.2 parts TMN-10 | 6.6 | 96.53 (14) |
| 22 | 0.4 parts TMN-10 | 7.9 | 586.05 (85) |
| 23 | 0.6 parts TMN-10 | 8.5 | 1489.27 (216) |

### Examples 24-27

These Examples 24 to 27 illustrate the effect of different levels of hexa as a curing agent on the properties of the proppants of this invention. In each of these Examples 24 - 27 the coating of the sand was carried out with two coats of the resin.

The procedures of Example 1 were substantially repeated by employing 1000 g of 20/40 Northern White sand, 40 g of Durez 34363 resin (4 % by weight), different amounts of hexa as summarized in table 5 (percent by weight of the resin) and 4 g of TMN-10 (0.4 parts per 100 parts of sand by weight, as summarized in Table 6). In each of these Examples 24 to 27, the sand was coated with resin in two coats, curing in two stages with hexa after each resin coat, and the surfactant was added at the end of curing of the second coat of resin, i.e., surfactant was coated on the outside of the resin layer. The starting temperature for the coating process was at 162 °C in each of these Examples 24 to 27.

Each of the samples thus obtained was evaluated by the crush resistance test and 51.7 °C (125 °F)
unconfined compressive strength test as described above. Various levels of hexa employed in each of these Examples 24 to 27, the results of crush resistant test (shown as Crush, percentage), and the UCS test results are summarized in Table 6. It is clear from these results that various levels of hexa can be employed to produce the proppants having excellent crush test and UCS properties by practice of this invention. It should further be noted that higher levels of hexa can be used to make the proppant by lowering the starting coating temperatures, which generally raises the UCS. It has also been observed generally that higher the amounts of hexa employed higher the thermal stability of the proppants.

**Table 6**

| Example No. | Level of Hexa (%) | Crush (%) | UCS kPa (psi) |
|---|---|---|---|
| 24 | 4.5 | 8.2 | 675.69 (98) |
| 25 | 6.5 | 7.3 | 275.79 (40) |
| 26 | 8.5 | 6.4 | 234.32 (34) |
| 27 | 10.5 | 5.9 | 96.53 (14) |

The following Examples 28 and 29 further illustrate the preparation of proppants of this invention in which only one coat of the resin and a curative can be used to obtain particles exhibiting excellent properties. In addition, such one coat process is also a cost effective way to make the proppants of this invention.

### Example 28

The procedures of Example 1 were substantially repeated in this Example 28, except for employing 1000 g of 20/40 Northern White sand, 40 g of Durez 34440 resin (4 % by weight of sand), 1.8 g of hexa (4.5 percent by weight of the resin) and 4 g of TMN-10 (0.4 parts per 100 parts of sand by weight), and mixing the resin with sand at a starting temperature of 156 °C. The resulting resin coated sand particles were evaluated for the crush resistance test and UCS test as described hereinabove. The results were found to be as follows: crush resistance test 8.4% at 68.95 MPa (10 K psi); and 51.7 °C (125 °F) UCS test 0.39 MPa (57 psi).

### Example 29

Example 29 also employed a single coat process substantially similar to Example 28, except that Durez 34363 was used as the resin, and the resin was modified with surfactant as follows. In this Example 29, 60 grams of Durez 34363 was melted in ajar on a 185 °C hot plate. Once melted, 9 grams of TMN-10 was mixed into the molten resin to make a homogeneous mixture. The molten resin was then poured out, cooled, and broken up into small pieces. Next, 1000 g of 20/40 Northern White sand was heated to 156 °C, and was coated with the above mentioned 35 g of Durez 34363 resin (3.5 % by weight of sand), which contained 4 g of TMN-10 (0.4 parts per 100 parts of sand by weight) and 1.8 g of hexa (4.5 percent by weight of the resin). The resulting resin coated sand particles were evaluated for the crush resistance test and UCS test as described hereinabove. The results were found to be as follows: crush resistance test 8.5% at 68.95 MPa (10 K psi); and 51.7 °C (125 °F) UCS test 0.35 MPa (51 psi).

In Examples 1-29, only one surfactant was used, however, it is within the scope of the invention to combine one or more surfactants, which can be cationic, anionic, or nonionic.

It should further be noted that Examples 1-29 demonstrate that the proppant particles of this invention after contacting water exhibited a UCS ranging from 96.53 - 1489.27 kPa (14-216 psi) at the test condition as explained above. Accordingly, the proppant particles of this invention can be adjusted into a UCS range of 137.9 - 1654.74 kPa (20-240 psi), as desired, simply by changing the surfactant concentration and/or formulation procedures as described hereinabove.

It is also within the scope of the invention to add some or all of the surfactant to the resin used to coat the proppant. It is also within the scope of the invention to add the surfactant to the mixer between resin coatings in the case of multiple coatings of resin on proppant.

While the examples used were for a single or two resin coating, the process can also be applicable to coatings where multiple different curable resin coatings are used, such as those described in U. S. Patent No. 7,153,575.

## Claims

1. Low temperature curable proppant particles, comprising:
particles;
a partially cured phenolic resin coating the particles;
0.1 weight parts or more to 2.0 weight parts or less of surfactant per 100 weight parts of the particles; and
wherein the proppant particles are dry and free flowing at room temperature.

2. The proppant particles according to claim 1, wherein the particles are coated with a single coat of the resin, wherein the resin is partially cured.

3. The proppant particles according to claim 1 or 2, wherein the surfactant is present on top of the resin coat or is incorporated into the resin coat.

4. The proppant particles according to claim 1, wherein the particles are coated with the resin at least two times to form a particle having a first coat and a second coat of the resin, preferably wherein the second coat of resin is partially cured.

5. The proppant particles according to claim 4, wherein the surfactant is at the top of the second coat of the resin, or wherein the surfactant is at the top of the first coat of the resin, or wherein the surfactant is a non-ionic surfactant.

6. A process for the production of low temperature curable proppant particles as defined in claim 1, comprising:
heating particles;
adding a phenolic resin to coat the particles with the resin;
adding a curative;
partially curing the resin; and
adding 0.1 weight parts or more to 2.0 weight parts or less of surfactant per 100 weight parts of the particles; and
wherein the proppant particles are dry and free flowing at room temperature;
**characterized in that** the surfactant is added after partially curing the resin.

7. A method for using proppant particles as defined in claim 1, said method comprising:
providing partially cured proppant particles comprising:
particles;
a phenolic resin coating on the particles, the resin being curable; and
0.1 weight parts or more to 2.0 weight parts or less of surfactant per 100 weight parts of the particles,
wherein the proppant particles are dry and free flowing at room temperature; and
wherein the proppant particles have a first tackiness, and
contacting the proppant particles with water while creating a water based proppant slurry and pumping the proppant particles into a wellbore, whereby the first tackiness is changed into a second tackiness wherein the second tackiness is greater than the first tackiness

8. The method of claim 7, wherein the first tackiness is less than 13.8 kPa (2 psi) as measured by unconfined compressive strength (UCS) at 51.7 °C (125 °F), and the second tackiness is in the range of 0.138 MPa to 0.965 MPa (20 to 140 psi) as measured by unconfined compressive strength (UCS) at 51.7 °C (125 °F), wherein the measurement of the unconfined compressive strength (UCS) is described in the description.

9. Use of the proppant particles as defined in any one of claims 1 to 5 for preventing closure of fractures and keeping the hydrocarbon conductivity of packed spaces of the subterranean formation.

## Patentansprüche

1. Niedertemperaturhärtbare Stützmittelteilchen, umfassend:
Teilchen;
ein partiell gehärtetes phenolisches Harz, das die Teilchen überzieht;
0,1 Gewichtsteile oder mehr bis 2,0 Gewichtsteile oder weniger Tensid pro 100 Gewichtsteile der Teilchen;
wobei die Stützmittelteilchen bei Raumtemperatur trocken und rieselfähig sind.

2. Stützmittelteilchen gemäß Anspruch 1, wobei die Teilchen mit einer einzigen Hülle des Harzes überzogen sind, wobei das Harz partiell gehärtet ist.

3. Stützmittelteilchen gemäß Anspruch 1 oder 2, wobei das Tensid auf dem Harzüberzug vorhanden oder in den Harzüberzug eingebaut ist.

4. Stützmittelteilchen gemäß Anspruch 1, wobei die Teilchen wenigstens zweimal mit dem Harz überzogen sind, so dass ein Teilchen entsteht, das einen ersten Überzug und einen zweiten Überzug des Harzes aufweist, wobei vorzugsweise der zweite Überzug des Harzes partiell gehärtet ist.

5. Stützmittelteilchen gemäß Anspruch 4, wobei sich das Tensid auf dem zweiten Überzug des Harzes befindet oder wobei sich das Tensid auf dem ersten Überzug des Harzes befindet oder wobei das Tensid ein nichtionisches Tensid ist.

6. Verfahren zur Herstellung von niedertemperaturhärtbaren Stützmittelteilchen, wie sie in Anspruch 1 definiert sind, umfassend:
Erhitzen von Teilchen;
Hinzufügen eines phenolischen Harzes, um die Teilchen mit dem Harz zu überziehen;
Hinzufügen eines Härtungsmittels;
partielles Härten des Harzes; und
Hinzufügen von 0,1 Gewichtsteilen oder mehr bis 2,0 Gewichtsteilen oder weniger Tensid pro 100 Gewichtsteile der Teilchen;
wobei die Stützmittelteilchen bei Raumtemperatur trocken und rieselfähig sind;
**dadurch gekennzeichnet, dass** das Tensid nach dem partiellen Härten des Harzes hinzugefügt wird.

7. Verfahren zur Verwendung von Stützmittelteilchen, wie sie in Anspruch 1 definiert sind, wobei das Verfahren umfasst:
Bereitstellen von partiell gehärteten Stützmittelteilchen, umfassend:
Teilchen;
einen Überzug aus phenolischem Harz auf den Teilchen, wobei das Harz härtbar ist; und
0,1 Gewichtsteile oder mehr bis 2,0 Gewichtsteile oder weniger Tensid pro 100 Gewichtsteile der Teilchen;
wobei die Stützmittelteilchen bei Raumtemperatur trocken und rieselfähig sind; und
wobei die Stützmittelteilchen eine erste Klebrigkeit aufweisen; und
In-Kontakt-Bringen der Stützmittelteilchen mit Wasser, während man einen Stützmittelschlamm auf Wasserbasis schafft und die Stützmittelteilchen in ein Bohrloch pumpt, wodurch sich die erste Klebrigkeit zu einer zweiten Klebrigkeit ändert, wobei die zweite Klebrigkeit größer ist als die erste Klebrigkeit.

8. Verfahren gemäß Anspruch 7, wobei die erste Klebrigkeit kleiner als 13,8 kPa (2 psi) ist, wenn sie anhand der einaxialen Druckfestigkeit (UCS) bei 51,7 °C (125 °F) gemessen wird, und die zweite Klebrigkeit im Bereich von 0,138 MPa bis 0,965 MPa (20 bis 140 psi) liegt, wenn sie anhand der einaxialen Druckfestigkeit (UCS) bei 51,7 °C (125 °F) gemessen wird, wobei die Messung der einaxialen Druckfestigkeit (UCS) in der Beschreibung beschrieben ist.

9. Verwendung der Stützmittelteilchen, wie sie in einem der Ansprüche 1 bis 5 definiert sind, zur Verhinderung des Verschlusses von Brüchen und zur Aufrechterhaltung der Kohlenwasserstoffleitfähigkeit von gefüllten Räumen der unterirdischen Formation.

## Revendications

1. Particules d'agent de soutènement durcissables à basse température, comprenant :
des particules ;
une résine phénolique partiellement durcie qui revêt les particules ;
de 0,1 partie en poids ou plus à 2,0 parties en poids ou moins de tensioactif, pour 100 parties en poids des particules ; et
les particules d'agent de soutènement étant sèches et présentant un écoulement libre à température ambiante.

2. Particules d'agent de soutènement selon la revendication 1, les particules étant revêtues d'une couche unique de la résine, la résine étant partiellement durcie.

3. Particules d'agent de soutènement selon la revendication 1 ou 2, dans lesquelles le tensioactif est présent sur le dessus de la couche de résine ou est incorporé dans la couche de résine.

4. Particules d'agent de soutènement selon la revendication 1, les particules étant revêtues de la résine au moins deux fois pour former une particule ayant une première couche et une seconde couche de la résine, de préférence dans lesquelles la seconde couche de résine est partiellement durcie.

5. Particules d'agent de soutènement selon la revendication 4, dans lesquelles le tensioactif se trouve sur la partie supérieure de la seconde couche de la résine, ou dans lesquelles le tensioactif se trouve sur la partie supérieure de la première couche de la résine, ou dans lesquelles le tensioactif est un tensioactif non ionique.

6. Procédé de production de particules d'agent de soutènement durcissables à basse température telles que définies à la revendication 1, comprenant :
le chauffage des particules ;
l'ajout d'une résine phénolique pour revêtir les particules avec la résine ;
l'ajout d'un agent de durcissement ;
le durcissement partiel de la résine ; et
l'ajout de 0,1 partie en poids ou plus à 2,0 parties en poids ou moins de tensioactif pour 100 parties en poids des particules ; et
dans lequel les particules d'agent de soutènement sont sèches et présentent un écoulement libre à température ambiante ;
**caractérisé en ce que** le tensioactif est ajouté après durcissement partiel de la résine.

7. Procédé d'utilisation des particules d'agent de soutènement telles que définies à la revendication 1, ledit procédé comprenant :
la fourniture de particules d'agent de soutènement partiellement durcies comprenant :
des particules ;
un revêtement de résine phénolique sur les particules, la résine étant durcissable ; et
de 0,1 partie en poids ou plus à 2,0 parties en poids ou moins de tensioactif, pour 100 parties en poids des particules ;
les particules d'agent de soutènement étant sèches et présentant un écoulement libre à température ambiante ; et
dans lequel les particules d'agent de soutènement présentent une première adhésivité, et
la mise en contact des particules d'agent de soutènement avec de l'eau créant ainsi une bouillie d'agent de soutènement à base aqueuse, et le transfert par pompage des particules d'agent de soutènement dans un puits de forage, la première adhésivité étant changée en une seconde adhésivité, la seconde adhésivité étant supérieure à la première adhésivité.

8. Procédé selon la revendication 7, dans lequel la première adhésivité est inférieure à 13,8 kPa (2 psi), telle que mesurée par la résistance à la compression simple (UCS) à 51,7 °C (125 °F), et la seconde adhésivité est comprise dans la plage de 0,138 MPa à 0,965 MPa (20 à 140 psi) telle que mesurée par la résistance à la compression simple (UCS) à 51,7 °C (125 °F), la mesure de la résistance à la compression simple (UCS) étant décrite dans la description.

9. Utilisation des particules d'agent de soutènement telles que définies à l'une quelconque des revendications 1 à 5 pour empêcher la fermeture de fractures et maintenir la conductivité des hydrocarbures des espaces comblés de la formation souterraine.
